(19) Europäisches Patentamt
European Patent Office
Office européen des brevets

(11) Publication number: **0 282 973 B1**

(12) **EUROPEAN PATENT SPECIFICATION**

(45) Date of publication of patent specification: **29.05.91**

(51) Int. Cl.5: **C08J 3/24**

(21) Application number: **88104104.0**

(22) Date of filing: **15.03.88**

The file contains technical information submitted after the application was filed and not included in this specification

# (54) Cross-linking of thermosetting resins by means of heating with saturated perfluoropolyether vapour.

(30) Priority: **16.03.87 IT 1970987**
**22.09.87 IT 4101087**

(43) Date of publication of application:
**21.09.88 Bulletin 88/38**

(45) Publication of the grant of the patent:
**29.05.91 Bulletin 91/22**

(84) Designated Contracting States:
**CH DE ES FR GB LI NL SE**

(56) References cited:
**EP-A- 0 106 754**

**DATABASE WPIL, abstract no. 85 023 074 Derwent**

(73) Proprietor: **AUSIMONT S.r.l.**
**Foro Buonaparte 31**
**I-20121 Milano(IT)**

(72) Inventor: **Bargigia, Gianangelo**
**47, via F. Chopin**
**I-20141 Milan(IT)**
Inventor: **Re, Alberto**
**40, via Lamarmora**
**I-20122 Milan(IT)**
Inventor: **Corbelli, Luigi**
**42, corso Vittorio Veneto**
**I-44100 Ferrara(IT)**
Inventor: **Johns, Ken**
**62, School Road**
**Asford, Middlesex(GB)**
Inventor: **Flabbi, Luciano**
**45, via Spezia**
**I-20142 Milan(IT)**
Inventor: **Srinivasan, Padmanabhan**
**39, via Oldofredi**
**I-20124 Milan(IT)**

(74) Representative: **Barz, Peter, Dr. et al**
**Patentanwälte Dipl.-Ing. G. Dannenberg Dr. P. Weinhold, Dr. D. Gudel Dipl.-Ing. S. Schubert, Dr. P. Barz Siegfriedstrasse 8**
**W-8000 München 40(DE)**

**EP 0 282 973 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The cross-linking of thermosetting resins such as, for example, epoxy resins may be carried out by supplying heat to the material to be cross-linked. This can be effected by using a stream of hot air, infrared radiation or by means of heat transfer through heating surfaces. An improvement of the thermal cross-linking technique has recently been achieved through the method disclosed in US-A-4,517,356 according to which the cross-linking is effected by immersing the material to be cross-linked into a saturated vapor of a liquid maintained under boiling in a suitable apparatus (a similar process is also disclosed in JP-A-59/219813). In comparison with the conventional methods based on other heating systems, this method offers a substantial advantage due to the drastic reduction of the heat-treatment times along with a high uniformity of the temperature at any site of the material to be cross-linked and a perfect control of the temperature.

The optimization of the operative conditions as regards the thermal aspect furthermore allows to obtain cross-linked products having improved characteristics also with respect to other known methods in which the heating times are much longer and/or the temperature control and uniformity are poor. Said US-A-4,517,356, which in general suggests to use liquids having a boiling point higher than 100 °C, specifically proposes and exemplifies the use of only two liquid compounds marketed by 3M Company under the tradenames Fluorinert ® FC43 and FC75, i.e., perfluorinated compounds (perfluorotrialkylamine and cyclic perfluoroether) having a boiling point of 174 °C and 102 °C, respectively.

(In the above JP-A-59/219813 the use of a mixture of perfluoropolyethers having a distillation temperature of about 220 to 280 °C is described.)

However, the possibility of carrying out said thermal cross-linking process depends on the availability of liquid products showing the necessary properties.

In fact, not all of the liquid products with boiling points higher than 100 °C, as generically proposed by said US-A-4,517,356 are suitable for said purpose: to be excluded are, of course, all those liquid products which react or are in some way incompatible with the resin (for example those having a solubilizing or swelling effect), the ones having a low heat resistance or a low resistance to air oxidation at the temperature of use, the ones which are inflammable, such as toluene, xylene, and the ones which are toxic, such as perchloroethylene (having a TLV of 50 ppm), or irritant.

In practice, the disclosure of the above US-A-4,517,356 and that of the following technical literature on the matter refers to only a few specific perfluorinated compounds.

Up till now it was not possible to practice the cross-linking methods based on heating, in particular at temperatures considerably exceeding 100 °C, by means of saturated vapor on a large scale, because on the one hand different types of resins and different processing methods require different temperatures and on the other hand suitable liquids specifically indicated and proposed only are the ones mentioned in US-A-4,517, 356 which are not sufficient to adequately cover a wide range of processing temperatures.

To obviate the lack of individual products having the desired boiling point, the above patent suggests to use mixtures of the two specific compounds mentioned in various ratios, thereby covering the temperature range from 102 to 175 °C. However, the use of mixtures of two compounds having significantly different boiling points leads to unsatisfactory results in practice, which also is true for the mixtures used in the above JP-A-59/219813.

In fact, during use, while boiling, the mixture tends to lose, in the form of vapor, predominantly the lower boiling component, as later acknowledged by the inventor of the above USA in an article in Electron. Tech. Ind. (1984), No.4, pages 73 to 78. This results in a continuous, progressive variation in the composition of the liquid and, by consequence, in the boiling temperature. Furthermore, it should be borne in mind that, on the basis of well known physico-chemical laws, when a mixture of two products having significantly different boiling points (as in the case of the above products FC 43 and FC 75)is brought to boiling, different equilibrium temperatures in the liquid and in the vapor are obtained and, in the latter, a temperature gradient establishes between the surface of the boiling liquid and the surface of vapor condensation, wherefore the temperature in the vapor phase varies from point to point. This makes it difficult to maintain the operative parameters of cross-linking constant, which in practice means that a process based on the use of two or more compounds having (significantly) different boiling points is non-operable. Furthermore, the losses due to incomplete condensation of the vapor and the escaping thereof from the apparatus are higher - the working temperatures being the same - in the case of a heterogeneous mixture, due to the presence of the significantly lower-boiling component, than the losses in the case of a pure compound of the same boiling point.

An object of the present invention is to overcome the above drawbacks by using, as working fluid, industrial-type perfluoropolyethers, consisting of mixtures of chemical individuals of similar structure but of

different molecular weights and physical properties, and having, in particular, boiling points which are very similar and comprised in a narrow range. In fact, the industrial products are obtained from the synthesis processes as continuous aggregates of chemical individuals with increasing molecular weights (and boiling points). From a practical point of view, at least in economical respect, it would be impossible to isolate the individual compounds.

The working fluid losses after long operating times are very small. However, in order to further minimize said losses it has been found that the use of a secondary fluid of the chlorofluorohydrocarbon type is advantageous.

Secondary fluids of said type are used in batch apparatus for the vapor-phase soldering but have never been used before for the cross-linking of thermosetting resins or polymer thick films.

This is due to the fact that, unlike what happens in the vaporphase soldering process, the use of a secondary fluid, in particular a halogenated hydrocarbon, may cause swelling or partial solubilization of the resin during cross-linking.

It is known that after cross-linking thermosetting resins are resistant to halogenated hydrocarbon solvents, but an analogous behaviour of the resins during the cross-linking step could not be expected.

It has surprisingly been found that the use of a secondary fluid does not affect the quality of the resin in the course of cross-linking and makes it possible to reduce the losses of the primary perfluoropolyether vapor.

At any rate it is not known whether the unexpected quality of the cured resin and of the polymer thick film results from the resistance of the resin to the secondary fluid vapor while in contact therewith during the curing or is rather due to the fact that the curing times are so short that they prevent the expected dissolving effect of the secondary vapor.

In order to minimize the possible dissolving effect of the secondary fluid it is advisable to minimize (to a few seconds) the residence time of the resin to be cross-linked in the secondary vapor area prior to the cross-linking step.

This can be achieved by raising the down-stroke speed of the truck containing the resin to be cured, consistent with the operative requirements, as described in the examples (5 cm/sec.).

Thus, according to the present invention there is provided a process for the cross-linking of thermosetting resins or heat curable elastomers or polymer thick films, which comprises heating the material or the article comprising said resin, elastomer or polymer thick film by means of a saturated vapor generated by a mixture of perfluoropolyethers with perfluoroalkyl end groups having a boiling range of $\leq 12^{\circ}$ C as determined according to ASTM D 1078 and an average boiling point ranging from 120 to 270° C, corresponding to the temperature necessary for cross-linking, said perfluoropolyethers being selected from those comprising structural units of the following types:

1) ($C_3F_6O$) and (CFXO) statistically distributed along the perfluoropolyether chain, wherein X is -F or $-CF_3$;
2) ($C_3F_6O$);
3) ($C_3F_6O$), this class furthermore comprising the group $-CF(CF_3)-CF(CF_3)$;
4) ($C_3F_6O$), ($C_2F_4O$), (CFXO), statistically distributed along the perfluoropolyether chain, wherein X is -F or $-CF_3$;
5) ($C_2F_4O$), ($CF_2O$),statistically distributed along the perfluoropolyether chain;
6) ($C_2F_4O$);
7) $(CXYCF_2CF_2O)n$, wherein X and Y, the same or different from each other, are H or F;
8)

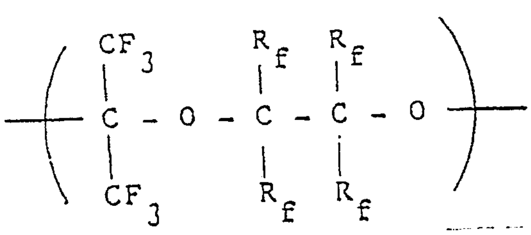

wherein $R_f$ is F or a perfluoroalkyl group.

Preferably, in addition to the perfluoropolyether (primary fluid) a secondary fluid of the fluorochlorohydrocarbon type which is to limit the primary fluid losses due to evaporation is also employed.

In order to overcome the shortcomings of the cited prior art there are utilized, as primary fluids, the industrial-type perfluoropolyethers recited above.

The industrially obtainable perfluoropolyethers (primary fluids) represent a series of chemically similar products with boiling points from 80° to 280° C and above.

Each product consists of a mixture of chemically similar individual compounds. Due to the presence of fractions which are considerably more volatile than the average the mixture, in general, does not meet the requirement of showing a constant boiling point for the entire duration of a process in which it is used as heating fluid in the form of saturated vapor generated by the mixture maintained under boiling.

However, it has surprisingly been found that the fractions having a boiling range of ≦ 12° C, preferably ≦ 10° C (determined by method ASTM D 1078) exhibit, in the use in question, a variation of the vapor condensation temperature in a narrow range of the order of 2-3° C even after a 500 hours of operation. Such a variation is fully acceptable in practical respect.

Preferred products according to the present invention are the industrial-type products having a perfluoropolyether structure and a boiling point ranging from 140 to 240° C, with a boiling range within the above limits.

The perfluoroether compounds containing the units indicated above preferably are selected, for example, from the following classes:

1) $A'O(C_3F_6O)_m(CFXO)_n$-A,

wherein X is -F or $-CF_3$; A and A', the same or different from each other, are $-CF_3$, $-C_2F_5$ or $-C_3F_7$; the units $C_3F_6O$ and CFXO are statistically distributed along the perfluoropolyether chain, m and n are integers such that the boiling point is in the above range; n can be equal to 0 and the ratio m/n is equal to 2 when n is different from 0.

These perfluoropolyethers may be obtained by photo-oxidation of hexafluoropropene (according to the process described in GB-A-1,104,482) and subsequent conversion of the end groups to chemically inert groups (in accordance with the description in GB-A-1,226,566).

2) $C_3F_7O(C_3F_6O)_m$-B,

wherein B is $-C_2F_5$ or $-C_3F_7$, and m is a positive integer such that the boiling point is in the above range. These products may be obtained by ionic telomerization of the hexafluoropropene epoxide and subsequent treatment of the acid fluoride with fluorine, according to the processes described in US-A-3,242,218.

3) $[C_3F_7O(C_3F_6O)_m-CF(CF_3)-]_2$,

wherein m is a positive integer, such that the product's boiling point is in the above range.

These products may be obtained by ionic oligomerization of the hexafluoropropene epoxide and subsequent photochemical dimerization of the acid fluoride according to processes described in US-A-3,214,478.

4) $A'O(C_3F_6O)_m(C_2F_4O)_n(CFXO)_q-CF_3A$,

wherein A and A', the same or different from each other, are $-CF_3$, $-C_2F_5$ or $-C_3F_7$; X is -F or $-CF_3$; m, n and q are integers and can also be zero, but at any rate are such that the boiling point is in the above range.

These products may be obtained by photo-oxidation of mixtures of $C_3F_6$ and $C_2F_4$ and by subsequent treatment with fluorine according to the process described in US-A-3,665,041.

5) $CF_3O(C_2F_4O)_p(CF_2O)_q-CF_3$,

wherein p and q are integers, the same or different from each other, the ratio p/q ranges from 0.5 to 2, and p and q are such that the boiling point is in the above range.

These perfluoropolyethers may be prepared by the method described in US-A-3,715,378, followed by a treatment with fluorine according to US-A-3,665,041.

6)$AO(CF_2CF_2O)_n$-A',

wherein A and A', the same or different from each other, are $-CF_3$ or $-C_2F_5$, and n is a positive integer such that the boiling point is in the above range.

These perfluoropolyethers may be prepared according to the process described in US-A-4,523,039.

7) $A(CXYCF_2CF_2O)_m$-A',

wherein A and A', the same or different from each other, are $-CF_3$, $-C_2F_5$ or $-C_3F_7$; X and Y, the same or different from each other, are H or F, and m is an integer such that the boiling point of the product is in the above range.

These perfluoropolyethers may be prepared according to the process described in EP-A-148,482.

8)

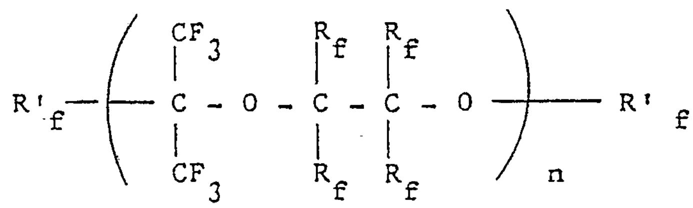

wherein $R'_f$ is perfluoroalkyl, n is at least 8, and $R_f$ is F or perfluoroalkyl. These perfluoropolyethers are described in patent application PCT WO 87/00538.

The primary perfluoropolyether fluids of the type defined above, belonging to the indicated classes of compounds, have proved to be particularly suitable for effecting the cross-linking, by the method of the present invention, of all of the major thermosetting resins, for example epoxy resins, unsaturated polyester resins, urethane resins, acrylic resins, phenol resins and alkyl melamine resins. In particular, phenol resins, alkyl melamine resins and polymer thick films have been used. Furthermore, the primary PFPE fluid is suitable for processes for the curing of elastomers such as ethylene/ propylene copolymers and ethylene/propylene/diene terpolymers and/or fluoroelastomers such as vinylidene fluoride copolymers (e.g. vinylidene fluoride/hexafluoropropene copolymers and $CH_2 = CF_2/C_3F_6/C_2F_4$ terpolymers In fact, the perfluoropolyethers defined above have proved to be fully compatible with the above resins and elastomers and do not give rise to drawbacks such as dissolution, swelling, gelling or other physical or chemical interactions with the resins during the curing process. Important technical advantages are achieved in particular in the cross-linking of EPR and EPDM elastomers, which usually is carried out in baths of molten salts.

In fact, it is known that the thermostability of these elastomers at the cross-linking temperature (200-230 °C) is not very high.

If the vapor-phase technique is adopted, the maximum degree of cross-linking is reached within short periods of time; when the heat treatment is carried out longer than necessary in vapor and as long as necessary in the molten salts, the mechanical characteristics of the rubber start to deteriorate.

It can thus be concluded that in the molten salt treatment the last cross-linking step takes place concurrently with degradation wherefore, whichever the duration of the treatment in molten salts may be, it will never be possible to obtain the optimum result.

It also is known that the use of molten salts causes pollution problems, the solution of which involves considerable investment costs.

The perfluoropolyethers employed according to the present invention are also suitable for curing epoxy, phenol and melamine resins containing finely dispersed metals, which, when applied according to a certain tracing onto proper substrates, form, further to cross-linking, conductive paths between electronic components of an integrated circuit.

The resistivity values obtained in this case are not only lower than those obtainable by means of heating in an air-circulation oven, but also lower than those obtained when the substrates are placed on plates which are heated to the cross-linking temperature. This also applies to the case where the substrate is made of alumina and the metal-filled resin layer is very thin.

The present perfluoropolyethers are capable of cross-linking the epoxy resins much better than it is possible in an oven at the same temperatures, as it is apparent from both the glass transition temperature value (which is higher in the case of a better cross-linking) and from the higher adhesion that they impart to metal elements caused to adhere to each other by means of the above resins.

Furthermore, the present perfluoropolyethers also exhibit a higher degree of the following properties which are essential for the curing process according to the invention:

- non-inflammability,
- resistance to high temperatures,
- good heat transmission coefficient,
- chemical inertness.

As secondary fluid it is possible to utilize any fluorochlorohydrocarbon fluid, preferably trichlorotrifluoroethane (DELIFRENE HP ®).

A suitable apparatus for practicing the process of the present invention comprising the use of the secondary fluid consists of a stainless steel tub equipped, at the bottom, with electrical heating elements and, at a certain height, with cooling coils; furthermore, it is equipped with a thermocouple for measuring the temperature and with a suction device for removing vapors.

Said apparatus is also equipped with a secondary fluid injection system for removing the primary fluid

vapors, as well as with a basket containing the article to be cross-linked, which can be brought into contact with the primary operative fluid for very short periods of time.

For comparative purposes, an apparatus - shown in the figure - not equipped with the secondary vapor injection system was utilized.

In the figure, the reference numerals denote the following features: (1) boiling liquid (2) container basket, (3) vapor area, (4) cooling area, (5) glass support, (6) cooling water inlet, (7) cooling water outlet.

The following examples are given to merely illustrate the present invention without being, however, a limitation thereof.

EXAMPLE 1

Two perfluorinated fluids having an average boiling point of 177° C (perfluoro-trialkylamine RM 175 produced by RIMAR) and of 102° C (cyclic perfluoroether RM 100 produced by RIMAR), resp., were mixed in order to obtain a mixture which was introduced into a 100 ml-Pyrex flask connected with a reflux cooler by means of a glass connector and equipped with a thermometer immersed in the liquid and a thermometer located in the equilibrium vapor, arranged 8 cm above the liquid surface. The mixture, brought to boiling, exhibited a temperature of 168° C (liquid) and of 156° C (vapor).

For comparative purposes, a perfluoropolyether mixture known under the trade-mark Galden ® - (Montedison), of general formula;

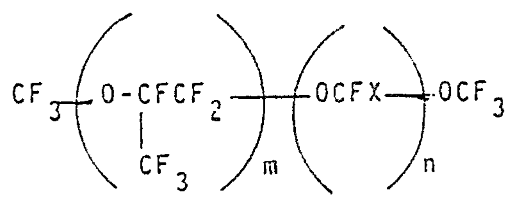

where $X = F, CF_3$

was tested, said mixture having - according to standard ASTM D 1078 - a distillation range from 154.5 to 160° C and exhibiting, after having been brought to boiling in the flask described above, temperatures of 158° C (liquid) and 156° C (vapor).

Operating exactly under the same conditions, 160 g of each mixture were brought to boiling in a 200-ml flask and were allowed to boil until in each flask a loss of fluid equal to 32 g was determined.

At the end, the temperatures of the liquid and the vapor under boiling conditions were measured again in the same flask: said temperatures were 178° C and 171° C, resp. for the perfluorotrialkylamine/cyclic perfluoroether mixture and 158° C and 156° C, resp., for the perfluoropolyether mixture.
In the latter case, as it is apparent, no variations occurred.

EXAMPLE 2

Following the procedure of example 1, a perfluorotrialkylamine/ cyclic perfluoroether mixture (A) was prepared which, on boiling, showed temperatures of 164.5° c (liquid) and 150° C (vapor), respectively. Said mixture was compared with perfluoropolyethers having the same general formula as in example 1 and being characterized by a distillation range of from 146 to 154.5° C and liquid/vapor equilibrium temperatures of 152° C and 150° C, respectively.

150 g of each tested fluid were brought to boiling in a 300-ml flask heated in a thermostatic liquid maintained 30° C above the temperature of the boiling liquid (194.5° C and 182° C, respectively).

After 1 hour the following losses were determined: 10.5% for the perfluorotrialkylamine/cyclic perfluoroether mixture and 2.8% for the perfluoropolyether mixture.

Example 2A

The above test was repeated using mixture A of the preceding example, but raising the temperature of the thermostat in order to always have a difference of 30° C between its temperature and the boiling liquid temperature: after 1 hour a loss of 13% was determined.

Example 2B

Following the procedure of example 2A and using, as fluid, perfluoropolyethers of general formula :

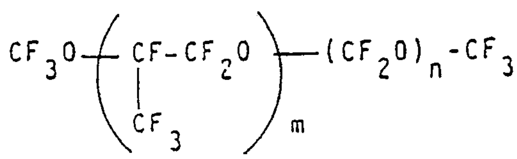

with a distillation range of 151°-157.5°C and with liquid/ vapor equilibrium temperatures of 155°C and 153°C, respectively a loss of 0.75% was determined after 1 hour.

EXAMPLE 3

Into the tub of a IVP apparatus (U.K.) made of stainless steel and equipped, at the bottom, with electric heating elements and, at the top, with cooling coils and also equipped with a thermocouple for measuring the temperatures and a device for sucking off the volatilizing vapors, there were introduced and brought to boiling 10 1 of perfluoropolyether GALDEN ® (Montedison) having the formula:

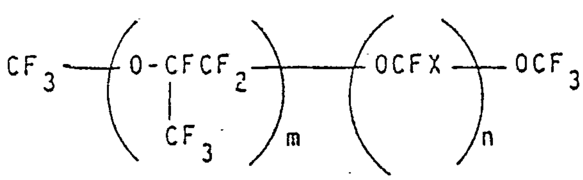 where X = F, $CF_3$

and being characterized by a viscosity of 4.0 $mm^2/s$ (cSt) at 20°C and a distillation temperature range of 213-219°C (according to standard ASTM D 1078).

At the beginning, the temperature of the vapors was 215°C. After 120 hours, to make up for the product losses, about 1.8 liters of the same fluid were added and, after additional 120 hours, about 1.7 liters were added.

Boiling was continued for a total of 475 hours. At the end the temperature of the vapors was 217°C. The total losses amounted to 12.6 kg, corresponding to 25.6 g/hour.

At the end of the test, the characteristics of the fluid were: viscosity at 20°C = 4.2$mm^2/s$ (cSt) distillation range = 214°-221°C.

Example 4

Two self-adhesive, about 0.15 mm thick tapes were parallelly arranged, at a 5 mm distance from each other, on alumina substrates measuring 25x30 mm and having a thickness of 0.6 mm.

Between them, two-component resin Epotek® H20 (containing Ag in the form of a finely dispersed powder) was deposited in order to form an exactly defined path. Prior to application onto the board, the resin was maintained under vacuum at room temperature to remove volatile material, thereby preventing defects due to the forming of blisters which would render unreliable the values measured after curing.

The adhesive tapes were removed and the resin was cross-linked both in an oven and in condensing vapor, as specified hereinbelow.

Using the apparatus represented in the figure, there were performed two series of tests, during which the boards were heated in an oven on heating plates to 160°C and in a vapor, also at 160°C, of perfluoropolyethers, having a distillation range of 158-167°6 and the structure indicated in example 1.
The results are given in the tables.

The volumetric resistivity was measured according to method Thiedig Milli-TO.2 in a cell properly constructed on the basis of method UNI 5608 (Kelvin type measuring method with 4 electrodes), after having accurately measured the dimensions of the path by means of a digital micrometer and a graduated optical monitor.

| Heating time | Resistivity (ohm x cm.) | |
|---|---|---|
| | oven | vapor |
| 2' | $1.80.10^{-4}$ | $1.28.10^{-4}$ |
| 1' 30" | no polym. | $1.29.10^{-4}$ |
| 0' 45" | no polym. | $1.30.10^{-4}$ |

Comparative test

In the apparatus schematically represented in the figure, DMF (dimethylformamide, b.p. = 153° C) was brought to boiling.
A substrate prepared as described above was placed in the vapor area and left there for 1 minute. Dissolution of the resin was observed. The Ag path remained on the substrate, but did not adhere to the substrate and crumbled very easily.

Example 5

The test of example 4 was repeated, except that the heating to 160° C was conducted in an air circulation oven. The resistivity values were measured as already described and are reported in the table.

| Heating time | Resistivity (ohm x cm.) | |
|---|---|---|
| | oven | vapor |
| 8' | $8.73.10^{-4}$ | |
| 4' | no polym. | $1.24.10^{-4}$ |
| 1' 30" | no polym. | $1.29.10^{-4}$ |
| 0' 45" | no polym. | $1.30.10^{-4}$ |

Example 6

By heating to 100° C, in an air circulation oven for 1 hour, a mixture of
100 parts by weight of epoxy resin Epikote 828®
90 parts by weight of methyl endomethylene tetrahydrophthalic anhydride (methyl"nadic" anhydride) and
1 part by weight of N-butyl imidazole
the corresponding prepolymer in solid form was prepared.
In two series of parallel tests the prepolymer was heated for different times both in an air circulation oven and in Galden® vapors to 165° and to 215° C, respectively.
The Galden® fluids were characterized by distillation ranges of 160-168° C and 213-219° C, respectively and were utilized in the apparatus of example 3.
By means of a Perkin Elmer DSC-4 calorimeter, employing a heating rate of 16° C/minute, in scanning I

and II there were measured the glass transition temperatures reported in the following table.

| Heating time min. | Heating to 165°C | | | | Heating to 215°C | | | |
|---|---|---|---|---|---|---|---|---|
| | oven | | vapor | | oven | | vapor | |
| | I scan. | II scan. | I scan. | II scan. | I scan. | II scan. | I scan. | II scan. |
| 1 | - | - | 53 | 48 | 60 | 45 | 117 | 118 |
| 2 | - | - | 65 | 58 | - | - | - | - |
| 3 | 53 | 46 | 68 | 69 | 67 | 75 | 124 | 127 |
| 5 | 65 | 66 | 72 | 101 | 105 | 116 | 132 | 136 |
| 10 | 138 | 136 | 150 | 140 | - | - | - | - |

Example 7

An EP copolymer Dutral® Co 038 based on $C_2H_4/C_3H_6$ (70-30%) was utilized to prepare a mix having the following composition :

| | | |
|---|---|---|
| elastomer | 100 | parts by weight |
| carbon black FEF | 55 | " " " |
| paraffin oil | 30 | " " " |
| zinc oxide | 5 | " " " |
| stearic acid | 1 | " " " |

| | | |
|---|---|---|
| cumyl peroxide | 1.5 | parts by weight |
| Trigonox® 29/40 | 0.5 | " " " |
| sulphur | 0.3 | " " " |

This mix was extruded to a rectangular section test piece measuring 35 x 1.5 mm, and in the form of a complex section test piece having a diameter of about 20 mm.

Curing took place in the same apparatus and using the same perfluoropolyether as in example 3 and, for a comparison with the usual method, in a molten salt bath maintained at the same temperature.

In the latter case the extrudate, after withdrawal from the molten salt, was washed in a water bath in order to dissolve the salts still adhering to it. The best obtainable result was achieved after 20 seconds and after 65 seconds, respectively when perfluoropolyether vapors and when molten salts were used.

The results are reported hereinbelow; the measurements were carried out according to standard ASTM

D 412 (tensile stress, elongation at break, tension set) and to standard ASTM D 2240 (hardness) :

| RECTANGULAR SECTION TEST PIECE | | | | | | |
|---|---|---|---|---|---|---|
| time (sec) | tensile stress MPa ($kg/cm^2$) | | elong. at break (%) | | tension set (%) | |
| | salts | vapor | salts | vapor | salts | vapor |
| 10 | no curing | 10.3(105) | no curing | 680 | no curing | 17 |
| 20 | 9.3 (95) | 14.7(150) | 800 | 450 | 18 | 11 |
| 65 | 14.2(145) | 14.2(145) | 480 | 460 | 12 | 11 |

| COMPLEX SECTION TEST PIECE | | | | |
|---|---|---|---|---|
| time (sec.) | tension set (%) | | Shore hardness A (%) | |
| | salts | vapor | salts | vapor |
| 10 | no curing | no curing | no curing | no curing |
| 20 | " " | 35 | " " | 35 |
| 60 | 30 | 18 | 27 | 46 |
| 90 | 20 | 19 | 45 | 48 |
| 120 | 19 | 19 | 47 | 50 |

After 60 seconds in the vapor, the test piece had a dry and non-tacky appearance; in the molten salts, the same appearance was obtained after 90 seconds.

Example 8

A $C_2H_4/C_3H_6$/ethylidene norbornene (ENB) terpolymer (65.5%, 31%, 3.5%), known as Dutral® TER 038, was used to prepare a mix having the following composition :

| | |
|---|---|
| elastomer EPDM | 100 parts by weight |
| carbon black FEF | 55 " " " |
| paraffin oil | 30 " " " |
| zinc oxide | 5 " " " |
| stearic acid | 1 " " " |
| tetramethyl thiuram monosulphide | 1.5 " " " |
| mercaptobenzothiazole | 0.75 " " " |
| sulphur | 1.5 " " " |

The mix was extruded and heat treated as described in example 7.

The test pieces treated in the vapor were free of defects.

The results of the characterization tests carried out according to the same standards as in example 7 are reported hereinbelow.

| RECTANGULAR SECTION TEST PIECE | | | | | | |
|---|---|---|---|---|---|---|
| time (sec) | tensile stress MPa (kg/cm$^2$) | | elong. at break (%) | | tension set (%) | |
| | salts | vapor | salts | vapor | salts | vapor |
| 10 | no curing | 10.3(105) | no curing | 500 | no cur. | 18 |
| 20 | 9.8(100) | 16.2(165) | 480 | 320 | 16 | 10 |
| 65 | 15.7(160) | 15.7(160) | 350 | 350 | 11 | 10 |

| COMPLEX SECTION TEST PIECE | | | | |
|---|---|---|---|---|
| time (sec) | tension set (%) | | Shore hardness A | |
| | salts | vapor | salts | vapor |
| 10 | no curing | no curing | no curing | no curing |
| 20 | no curing | 22 | no curing | 27 |
| 60 | 25 | 16 | 30 | 48 |
| 90 | 17 | 16 | 49 | 47 |
| 120 | 16 | 17 | 51 | 46 |

Example 9

O-rings (inside diameter = 2.5 mm, thickness = 3.5 mm) were molded from Tecnoflon® FOR 65BI. The molding modalities were as follows : 190 °C for 4 minutes. Part of the O-rings underwent post-curing in an oven at 250 °C for 24 hours; another part of the O-rings was heated for 2 hours in the same IVP apparatus as in example 3, containing a fluid having the general formula indicated in example 3 but a distillation range of 220 °-230 °C, a viscosity of 4.6mm$^2$/s (cSt) at 20 °C and generating vapor at 225 °C; still another part of the O-rings was treated in the vapor of an analogous fluid but with a distillation range of 236 °-245 °C, which generated vapor at 240 °C. The results, obtained according to standard ASTM D 1414, are reported in the following table.

| | after molding | after post-curing in vapor | | |
|---|---|---|---|---|
| | | 225°C 2 hours | 240°C 2 hours | 240°C 4 hours |
| tensile stress, MPa $(kg/cm^2)$ | 7.8(80) | 10.3(105) | 10.5(107) | 10.8(110) |
| elong. at break (%) | 21.4(218 | 19.6(200) | 19.4(198) | 18.8(192) |
| modulus 100 , MPa $(kg/cm^2$ | 4.0(41) | 4.1(48) | 4.8(49) | 5.1(52) |

Examples 10-15

Apparatus 1 (IVP®) (U.K.) included a stainless steel tub equipped, at the bottom, with electric heating elements and, in the upper portion of the tub, with cooling coils; furthermore it was equipped with a thermocouple for measuring the temperature and with a suction device for removing the volatilizing vapors; moreover it included a secondary fluid injection system for removing the vapors of the primary fluid, and a movable truck for introducing the article to be cured into the primary vapor area.
This apparatus was used for the tests which utilized trichlorotrifluoroethane as secondary fluid.

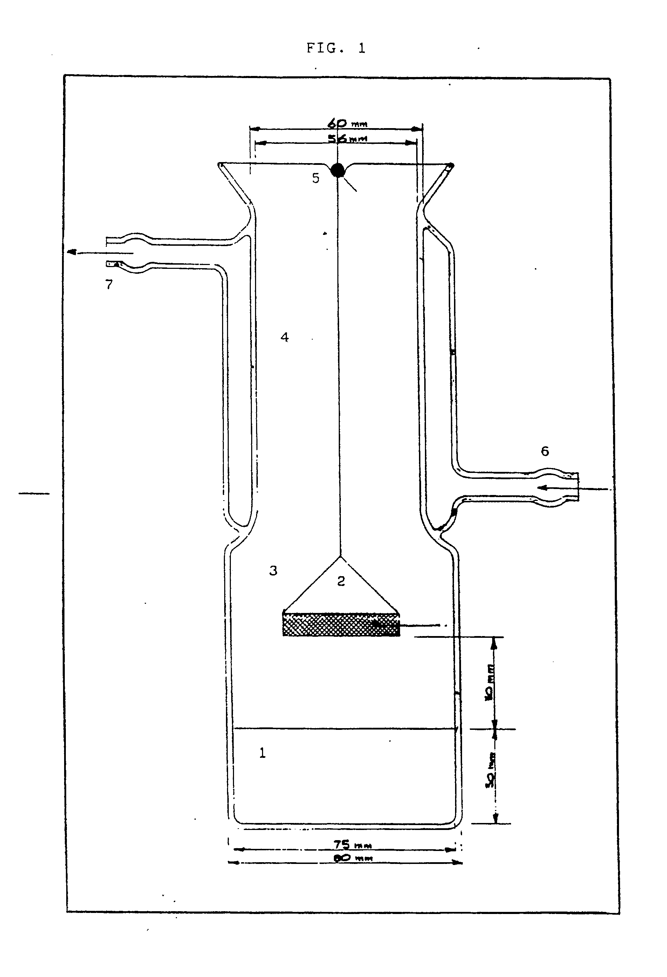

Apparatus 2 is shown in Figure 1 and consisted of a glass structure, equipped with cooling coils but without a spray system for the secondary fluid; it was utilized for tests characterized by the exclusive use of primary fluid.

Fluid 1 was a commercial-type perfluoropolyether GALDEN LS® (Montedison) of formula :

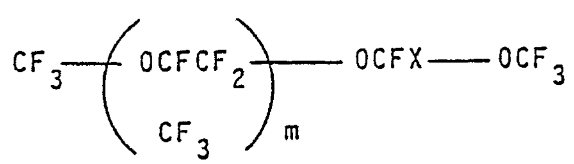, where X = F, $CF_3$

characterized by a viscosity of 2.50mm²/s (cSt) at 20 °C and by a distillation range of 188°-192°C (according to standard ASTM D 1078).

Fluid 2 was a commercial-type perfluoropolyether GALDEN LS 230®, having the formula indicated above and being characterized by a viscosity of 4.40mm²/s (cSt) at 20 °C and a distillation range of 228-233 °C (according to standard ASTM D 1074).

Test 1

A circuit of type 1109 S, ESL® U.K. was introduced into apparatus 1 described above. The apparatus was filled with 20 1 of the perfluoropolyether described above, while the circuit was made of a Ag-filled phenolic resin. The resin was introduced into the trifluorotrichloroethane vapors (secondary fluid) at a speed of 5 cm/sec.

Various samples cross-linked in the perfluoropolyehter vapors for different times were prepared. The results are given in Table 1.

The sample, once taken out of the primary fluid area, was left for 30 seconds in the secondary vapor area.

The test pieces of the conductive and resistive resins were pretreated at about 100°C for several minutes in order to remove the solvent which may have caused problems during the cross-linking step; simply for this reason the values of resistance measured prior to cross-linking were not equal to one another.

The resistance values, as is known to those skilled in the art, were measured in Ohm/square by means of a high-accuracy digital multimeter.

TABLE 1 - RESIN A

| | T °C | Curing time minutes | Resistance prior to curing mΩ/□ | Resistance after curing mΩ/□ |
|---|---|---|---|---|
| FLUID 1 | 190 | 3 | 31.4 | 14.5 |
| | | 5 | 32.2 | 13.7 |
| FLUID 2 | 230 | 1 | 33.8 | 13.1 |

For comparative purposes, the same test was repeated in apparatus 2 and in an oven according to the optimum curing cycle proposed for the resin. The results are reported in Table 2.

TABLE 2

| | T °C | Curing time minutes | Resistance prior to curing mΩ/□ | Resistance after curing mΩ/□ |
|---|---|---|---|---|
| FLUID 1 | 190 | 1 | 33.38 | 20.12 |
| | | 3 | 34.28 | 17.96 |
| | | 5 | 30.92 | 16.51 |
| FLUID 2 | 230 | 1 | 33.06 | 17.27 |
| | | 3 | 33.70 | 19.80 |
| | | 5 | 32.90 | 21.60 |
| | | 10 | 34.00 | 21.10 |
| OVEN ~~FURNACE~~ | 150 | 120 | 34.0 | 32.4 |

From the above results it is apparent that the cross-linking in an oven leads to a very small decrease in resistance while good results in the reduction of resistance were achieved when using the vapor-phase cross-linking method only with primary fluid, and excellent results were obtained when using the apparatus provided with primary fluid and secondary fluid.

Test 2

Following the modalities described in test 1, a resistive resin (RS 15113 ESL®) of the phenolic type filled with carbon was cross-linked. According to the specifications, a curing cycle in an oven at 150 °C for 2 hours should be optimum for this resin.

The results obtained by heating the perfluoropolyether fluid (of types 1 and 2) in the apparatus also provided with secondary fluid (1) are reported in Table 3.

TABLE 3

| | T °C | Curing time minutes | Resistance prior to curing kΩ/□ | Resistance after curing kΩ/□ |
|---|---|---|---|---|
| FLUID 1 | 190 | 3 | 9.11 | 0.62 |
| | | 5 | 8.38 | 0.60 |
| FLUID 2 | 230 | 1 | 7.7 | 0.43 |
| | | 3 | 11.6 | 0.43 |
| | | 10 | 11.8 | 0.56 |

Table 4 shows the results obtained by using apparatus (2) and the ones obtained by using an oven.

TABLE 4

| | T°C | Curing time minutes | Resistance prior to curing kΩ/□ | Resistance after curing kΩ/□ |
|---|---|---|---|---|
| FLUID 1 | 190 | 3 | 9.67 | 0.56 |
| | | 5 | 8.58 | 0.49 |
| | | 10 | 7.41 | 0.45 |
| FLUID 2 | 230 | 1 | 18.50 | 0.44 |
| | | 3 | 14.80 | 0.39 |
| | | 6 | 15.00 | 0.49 |
| OVEN ~~FURNACE~~ | 150 | 120 | 12.6 | 2.04 |

Test 3

Following the modalities of the preceding tests, a series of tests was carried out on a resistive resin (X 2200 Coates®) of the alkyl melaminic type filled with graphite. According to the recommended curing cycle the resin, after a 30-minute treatment at 140 °C, should have had a nominal resistance of 33 kΩ/□.

Table 5 shows the results of the tests carried out with perfluoropolyether fluids 1 and 2, including trifluorotrichloroethane as secondary fluid.

Table 6 shows the results obtained after the vapor-phase curing with primary fluids only and after the curing in an oven.

TABLE 5

| | T°C | Curing time minutes | Resistance prior to curing Ω/□ | Resistance after curing Ω/□ |
|---|---|---|---|---|
| FLUID 1 | 190 | 5 | 88.7 | 16,9 |
| FLUID. 2 | 230 | 3 | 98,1 | 14.1 |

TABLE 6

| | T°C | Curing time minutes | Resistance prior to curing Ω/□ | Resistance after curing Ω/□ |
|---|---|---|---|---|
| FLUID 1 | 190 | 1 | 89.5 | 22.2 |
| | | 3 | 91.5 | 18.1 |
| | | 5 | 98.2 | 17.3 |
| FLUID 2 | 230 | 1 | 97 | 15.5 |
| | | 3 | 99 | 13.5 |
| OVEN | 140 | 30 | 92.8 | 40.2 |
| | 140 | 30 | 90.1 | 38.9 |

Test 4

Following the modalities of the preceding tests, various tests for curing a resistive alkyd melaminic resin filled with graphite (DCI 0342 Coates®) were carried out. According to the recommended curing cycle the resin, after a 30-minute treatment at 140° C, should have had a nominal resistance of 100 Ω/□.

Table 7 shows the results of the tests conducted in apparatus 1 , wherein curing was carried out in the presence of trifluorotrichloroethane as secondary fluid.

Table 8, conversely, shows the results obtained by use of apparatus 2 provided with one operating fluid only and the results obtained in an oven according to the recommended modalities.

## TABLE 7

| | T°C | Curing time minutes | Resistance prior to curing Ω/□ | Resistance after curing Ω/□ |
|---|---|---|---|---|
| FLUID 1 | 190 | 3 | 394 | 49.8 |
| | | 5 | 400 | 47.2 |
| FLUID 2 | 230 | 1 | 404 | 43.6 |
| | | 3 | 405 | 41.1 |
| | | 5 | 399 | 39.8 |
| | | 10 | 412 | 39.5 |

TABLE 8

| | T°C | Curing time minutes | Resistance prior to curing Ω/□ | Resistance after curing Ω/□ |
|---|---|---|---|---|
| FLUID 1 | 190 | 1 | 409 | 65.0 |
| | | 3 | 411 | 50.8 |
| | | 5 | 424 | 48.3 |
| FLUID 2 | 230 | 1 | 446 | 44.3 |
| | | 3 | 402 | 40.0 |
| | | 5 | 399 | 39.0 |
| | | 10 | 432 | 38.2 |
| OVEN | 140 | 30 | 411 | 105.9 |
| | 140 | 30 | 415 | 103.7 |

Test 5

According to the modalities of the preceding tests, a conductive alkyl melaminic resin filled with silver (X 2201 Coates®) was cured with the above perfluoropolyether fluids 1 and 2 in the vapor phase.

Table 9 shows the results of the tests carried out in apparatus 1 in the presence of trifluorotrichloroethane vapor as secondary fluid.

Table 10 shows the results of the tests carried out without the secondary fluid. According to the suggested modalities, the 1-hour curing cycle at 140° C should provide resins having a nominal resistance of 0.05 Ω/□.

TABLE 9

| | T°C | Curing time minutes | Resistance prior to curing Ω/□ | Resistance after curing Ω/□ |
|---|---|---|---|---|
| FLUID 1 | 190 | 3 | 0.09 | 0.018 |
| | | 5 | 0.159 | 0.014 |
| FLUID 2 | 230 | 1 | 0.210 | 0.004 |
| | | 3 | 0.199 | 0.005 |
| | | 5 | 0.230 | 0.004 |
| | | 10 | 0.380 | 0.002 |

TABLE 10

| | T°C | Curing time minutes | Resistance prior to curing Ω / □ | Resistance after curing Ω / □ |
|---|---|---|---|---|
| FLUID 1 | 190 | 1 | 0.282 | 0.056 |
| | | 3 | 0.269 | 0.043 |
| | | 5 | 0.318 | 0.038 |
| FLUID 2 | 230 | 1 | 0.900 | 0.036 |
| | | 3 | 1.100 | 0.036 |
| | | 5 | 0.900 | 0.040 |
| | | 10 | 0.200 | 0.043 |

## Claims

1. A process for the cross-linking of thermosetting resins or heat curable elastomers or polymer thick films, which comprises heating the material or the article comprising said resin, elastomer or polymer thick film by means of a saturated vapor generated by a mixture of perfluoropolyethers with perfluoroalkyl end groups having a boiling range of ≤12° C as determined according to ASTM D 1078 and an average boiling point ranging from 120 to 270° C, corresponding to the temperature necessary for cross-linking, said perfluoropolyethers being selected from those comprising structural units of the following types:
   1) ($C_3F_6O$) and (CFXO), statistically distributed along the perfluoropolyether chain, wherein X is -F or $-CF_3$;
   2) ($C_3F_6O$);
   3) ($C_3F_6O$), this class furthermore comprising the group $-CF(CF_3)-CF(CF_3)$;
   4) ($C_3F_6O$), ($C_2F_4O$), (CFXO), statistically distributed along the perfluoropolyether chain, wherein X is -F or $-CF_3$;
   5) ($C_2F_4O$), ($CF_2O$), statistically distributed along the perfluoropolyether chain;
   6) ($C_2F_4O$);
   7) $(CXYCF_2CF_2O)_n$, wherein X and Y, the same or different from each other, are H or F;
   8)

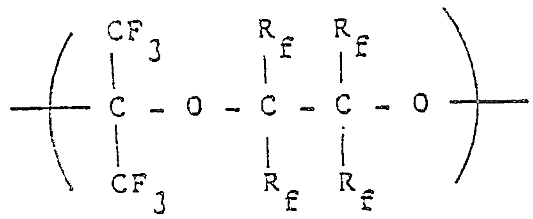

wherein $R_f$ is F or a perfluoroalkyl group.

2. The process of claim 1 wherein epoxy resins to which a metal powder has been added are cured.

3. The process of claim 1 wherein elastomers such as ethylene/ propylene copolymers and ethylene/propylene/diene terpolymers are cured.

4. The process of claim 1 wherein fluoroelastomers such as vinylidene fluoride copolymers are cured.

5. A process according to any one of the preceding claims, wherein additionally a secondary fluorinated vapor of the chlorofluorohydrocarbon type is present.

6. The process of claim 5 wherein the secondary vapor consists of trichlorotrifluoroethane.

## Revendications

1. Un procédé pour la réticulation de résines thermodurcissables ou d'élastomères ou de films de polymères épais pouvant durcir sous l'effet de la chaleur, qui consiste à chauffer la matière ou l'article comprenant ladite résine, ledit élastomère ou ledit film polymère épais, au moyen d'une vapeur saturée produite par un mélange de perfluoropolyéthers comportant des groupes terminaux perfluoroalkyles, ayant un intervalle d'ébullition, déterminé par la méthode ASTM D-1078, inférieur ou égal à 12° C et un point d'ébullition moyen compris entre 120 et 270° C, fonction de la température requise pour la réticulation, lesdits perfluoropolyéthers étant choisis parmi ceux comportant des motifs structuraux ayant les types suivants:
   1) $(C_3F_6O)$ et $(CFXO)$ répartis d'une manière statistique le long de la chaîne perfluoropolyéther, où X est -F ou $-CF_3$;
   2) $(C_3F_6O)$;
   3) $(C_3F_6O)$, cette classe comprenant en outre le groupe $-CF(CF_3)-CF(CF_3)$;
   4) $(C_3F_6O))$, $(C_2F_4O))$, $(CFXO)$, répartis d'une manière statistique le long de la chaîne perfluoropolyéther, où X est -F ou $-CF_3$;
   5) $(C_2F_4O)$, $(CF_2o)$, répartis d'une manière statistique le long de la chaîne perfluoropolyéther;
   6) $(C_2F_4O)$;
   7) $(CXYCF_2CF_2O)_n$, où X et Y, qui sont identiques ou différents, représentent chacun H ou F;
   8)

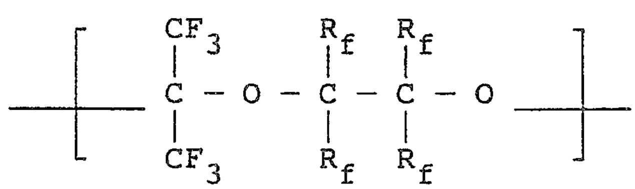

dans laquelle $R_f$ est F ou un groupe perfluoroalkyle.

2. Le procédé selon la revendication 1, dans lequel on durcit des résines époxy auxquelles on a ajouté une poudre métallique.

3. Le procédé selon la revendication 1 dans lequel on durcit des élastomères comme des copolymères

éthylène/propylène et des terpolymères éthylène/propylène/diènes.

4. Le procédé selon la revendication 1, dans lequel on durcit des fluoroélastomères, comme des copolymères de fluorure de vinylidène.

5. Un procédé selon l'une quelconque des revendications précédentes, dans lequel est en outre présente une vapeur fluorée secondaire du type hydrocarbure chlorofluoré.

6. Le procédé selon la revendication 5, dans lequel la vapeur secondaire est constituée de trichlorotrifluoroéthane.

## Ansprüche

1. Verfahren zur Vernetzung von hitzehärtbaren Harzen oder durch Hitze härtbaren Elastomeren oder PolymerDickfilmen, umfassend das Erhitzen des Materials oder Gegenstands, welches bzw. welcher das Harz, das Elastomer oder den Polymer-Dickfilm umfaßt, mittels gesättigtem Dampf, der durch eine Mischung von Perfluorpolyethern mit Perfluoralkylendgruppen erzeugt wird, die einen nach ASTM D1078 bestimmten Siedebereich von ≦ 12 °C haben und einen durchschnittlichen Siedepunkt von 120 bis 270 °C, entsprechend der zur Vernetzung nötigen Temperatur, aufweisen, wobei die Perfluorpolyether ausgewählt sind aus solchen mit Struktureinheiten der folgenden Typen:
   1) ($C_3F_6O$) und (CFXO), statistisch entlang der Perfluorpolyetherkette verteilt, worin X -F oder -$CF_3$ darstellt;
   2) ($C_3F_6O$);
   3) ($C_3F_6O$), wobei diese Gruppe außerdem die Gruppe -CF($CF_3$)-CF($CF_3$) umfaßt;
   4) ($C_3F_6O$), ($C_2F_4O$), (CFXO), statistisch entlang der Perfluorpolyetherkette verteilt, worin X -F oder -$CF_3$ darstellt;
   5) ($C_2F_4O$), ($CF_2O$), statistisch entlang der Perfluorpolyetherkette verteilt;
   6) ($C_2F_4O$);
   7) $(CXYCF_2CF_2O)_n$, worin X und Y, gleich oder verschieden voneinander, H oder F sind;
   8)

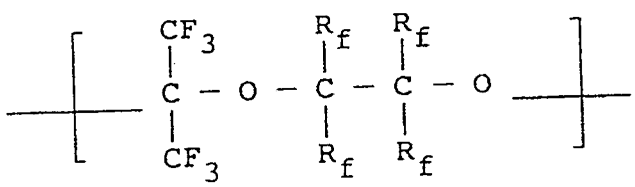

   worin $R_f$ F oder eine Perfluoralkylgruppe darstellt.

2. Verfahren nach Anspruch 1, worin Epoxyharze, zu denen ein Metallpulver zugesetzt worden ist, gehärtet werden.

3. Verfahren nach Anspruch 1, worin Elastomere wie Ethylen/Propylen-Copolymere und Ethylen/Propylen/Dien-Terpolymere gehärtet werden.

4. Verfahren nach Anspruch 1, worin Fluorelastomere wie Vinylidenfluorid-Copolymere gehärtet werden.

5. Verfahren nach irgendeinem der vorhergehenden Ansprüche, worin zusätzlich ein sekundärer fluorierter Dampf vom Chlorfluorkohlenwasserstoff-Typ anwesend ist.

6. Verfahren nach Anspruch 5, worin der Sekundär-Dampf aus Trichlortrifluorethan besteht.

FIG. 1